# EUROPÄISCHE PATENTANMELDUNG

(11) **EP 1 843 136 A2**
(43) Veröffentlichungstag der Anmeldung: **10.10.2007**
(21) Anmeldenummer: 07000953.5
(22) Anmeldetag: 18.01.2007
(51) Int. Cl.: G01F 15/06, G01F 15/075

(54) **Verfahren und System zur Bestimmung und/oder Anzeige von Heizkosten**

(30) Priorität: 03.04.2006 DE 102006015835
(71) Anmelder: ista Shared Services GmbH, 45131 Essen (DE)
(72) Erfinder: Mügge, Günter, 48159 Münster (DE); Niederfeld, Gerhard, 45131 Essen (DE)
(74) Vertreter: COHAUSZ DAWIDOWICZ HANNIG & SOZIEN

(57) **Zusammenfassung**

Die Erfindung betrifft ein Verfahren zur Bestimmung und/oder Anzeige von Heizkosten bei dem der gesamte akkumulierte Endenergieverbrauch, einer Liegenschaft mit wenigstens einer Nutzeinheit fortlaufend erfasst und an eine Auswerteeinheit (2) übermittelt wird, in der die Gesamtkosten wenigstens anhand des akkumulierten Endenergieverbrauches ermittelt werden, wobei die Gesamtkosten anhand des in jeder Nutzeinheit durch Verbrauchszähler (3, 3a), insbesondere Heizkostenverteiler und/oder Wärmemengen- und/oder Warmwasserzähler erfassten Wärme- und/oder Warmwasserverbrauchs in Kosten für jede Nutzeinheit und/oder Verbrauchsstelle umgerechnet und zur Anzeige in einem Anzeigegerät (6,3) oder zum Abruf durch einen Nutzer einer Nutzeinheit bereitgehalten werden. Die Erfindung betrifft weiterhin ein System zur Berechnung und/oder Anzeige von Heizkosten umfassend wenigstens einen Endenergieverbrauchszähler (1) zur Erfassung des gesamten akkumulierten Endenergieverbrauchs einer Liegenschaft mit wenigstens einer Nutzeinheit, und eine Auswerteeinheit (2), an die der erfasste Endenergieverbrauch übermittelbar ist, und in der die Gesamtkosten wenigstens anhand des Endenergieverbrauches ermittelbar sind, und wenigstens einen Verbrauchszähler (3, 3a) für wenigstens eine Verbrauchstelle jeder Nutzeinheit zur Erfassung des Wärmeverbrauchs und/oder Warmwasserverbrauchs, wobei der Wärme- und/oder Warmwasserverbrauch von einem Verbrauchszähler (3,3a) an eine Auswerteeinheit (2) übermittelbar ist, und eine Anzeigeeinheit (3, 6), mittels der die von der Auswerteeinheit (2) ermittelten Kosten für die einzelnen Nutzeinheiten und/oder Verbrauchsstellen anzeigbar sind.

## Beschreibung

Die Erfindung betrifft ein Verfahren und ein System zur Bestimmung und/oder Anzeige von Heizkosten.

Die verbrauchsabhängige Abrechnung von Heizkosten ist seit vielen Jahren üblich und in verschiedenen europäischen Ländern gesetzlich geregelt. Die Erfassung der Verbräuche erfolgt dabei mit Wärmezählern oder Heizkostenverteilern bzw., soweit die Heizanlage auch zur Trinkwassererwärmung vorgesehen ist, auch mit Warmwasserzählern.

Für diese Erfassungsgeräte ist durch die eichrechtlichen Bestimmungen oder die einschlägigen Normen eine Anzeige vorgeschrieben, um dem Verbraucher eine Kontrolle des für die Abrechnung zugrunde gelegten Verbrauchs zu ermöglichen. Die Anzeige erfolgt dabei in geeigneten physikalischen Einheiten (Wasserzähler: m³, Wärmezähler: kWh) oder dimensionslos (Heizkostenverteiler).
Die Anzeige dient insbesondere sparsamen Verbrauchern auch dazu, den Verbrauch fortlaufend zu kontrollieren und damit eine Rückkopplung für ein sparsames Heizverhalten zu ermöglichen.

Nachteilig ist dabei für den Verbraucher, dass auf der Anzeige nicht direkt die Heizkosten oder zumindest ein Schätzwert dafür abzulesen ist. Das war bisher technisch nicht möglich, da die Kosten für die jeweilige Verbrauchseinheit nicht von vorneherein bekannt sind, sondern erst im Zuge der Heizkostenabrechnung unter Berücksichtigung aller zu verteilenden Kosten ermittelt werden können.

Üblicherweise stehen diese Kosten erst nach Ende der Heizperiode und Vorliegen aller Einzelrechnungen insbesondere für die Brennstoffe fest.

Aufgabe der Erfindung ist es, dem Nutzer, beispielsweise Eigentümer oder Mieter einer Nutzeinheit, ein Verfahren und ein System zur Verfügung zu stellen, mittels dem ein Nutzer jederzeit sich über die aktuell bis zu diesem Zeitpunkt aufgelaufenen Heizkosten informieren kann, beispielsweise um so Einfluss zu nehmen auf sein Verbrauchsverhalten.

Diese Aufgabe wird gemäß dem erfindungsgemäßen Verfahren dadurch gelöst, dass der gesamte akkumulierte Endenergieverbrauch einer Liegenschaft mit wenigstens einer Nutzeinheit fortlaufend erfasst und an eine Auswerteeinheit übermittelt wird, in der die Gesamtkosten wenigstens anhand des akkumulierten Endenergieverbrauchs ermittelt werden, wobei die Gesamtkosten anhand des in jeder Nutzeinheit durch Verbrauchszähler, insbesondere Heizkostenverteiler und/oder Wärmemengen - und/oder Warmwasserzähler erfassten Wärme- und/oder Warmwasserverbrauchs in Kosten zumindest für jede Nutzeinheit umgerechnet und zur Anzeige in einem Anzeigengerät oder zum Abruf durch einen Nutzer einer Nutzeinheit bereit gehalten werden.

Ein System, welches zur Durchführung eines solchen Verfahrens eingesetzt werden kann, umfasst dabei wenigstens einen Endenergieverbrauchszähler zur Erfassung des gesamten akkumulierten Endenergieverbrauchs einer Liegenschaft mit wenigstens einer Nutzeinheit und eine Auswerteeinheit, an die der erfasste Endenergieverbrauch übermittelbar ist und in der die Gesamtkosten wenigstens anhand des Endenergieverbrauchs ermittelbar sind sowie wenigstens einen Verbrauchszähler für wenigstens eine Verbrauchsstelle jeder Nutzeinheit zur Erfassung des Wärmeverbrauchs und/oder Warmwasserverbrauchs, wobei der Wärme- und/oder Warmwasserverbrauch von einem Verbrauchszähler an eine Auswerteeinheit übermittelbar ist sowie eine Anzeigeeinheit, mittels der die von der Auswerteeinheit ermittelten Kosten für die einzelnen Nutzeinheiten oder Verbrauchsstellen anzeigbar sind.

Wesentlich für das erfindungsgemäße Verfahren und das erfindungsgemäße System ist es, dass anders als bei bislang bekannten Verfahren, bei denen lediglich abstrakt oder in einer für den Nutzer schwer zu interpretierenden Maßeinheit die verbrauchten Energiemengen angezeigt werden, gemäß der Erfindung der Endenergieverbrauch kontinuierlich erfasst wird und anhand dieses Endenergieverbrauchs Gesamtkosten ermittelt und auf jede Nutzeinheit umgerechnet werden kann.

Hierbei kann der akkumulierte Endenergieverbrauch zumindest den Brennstoff- und/oder Fernwärmeverbrauch für die Beheizung und/oder Warmwasserversorgung und/oder den Stromverbrauch, insbesondere auch für Hilfsantriebe, umfassen. So können fortlaufend, gegebenenfalls stichtagsgenau, die zu verteilenden Gesamtkosten ermittelt werden und eine quasi simultane Verteilung dieser Kosten auf zumindest die Nutzeinheiten einer Liegenschaft vorgenommen werden.

Die Erfassung des akkumulierten Endenergieverbrauchs kann beispielsweise durch wenigstens einen Endenergieverbrauchszähler vorgenommen werden, der den gesamten Endenergieverbrauch für alle Nutzeinheiten erfasst und nach der Erfassung kabel- und/oder funkgebunden an eine Auswerteeinheit übermittelt.

Soweit die Heizanlage mit leitungsgebundener Energie, wie z.B. Erdgas oder Fernwärme versorgt wird, kann der vorhandene Tarifzähler für die Durchführung des Verfahrens eingesetzt werden, und dann z.B. mit einer geeigneten Schnittstelle, z.B. Impuls- oder M-Bus-Ausgang oder Funk versehen sein, über die der momentane akkumulierte Verbrauch direkt der Auswerteeinheit zugeleitet werden kann.

Für die Genauigkeit der Berechnung der Gesamtkosten kann es von Vorteil sein, wenn sich diese Gesamtkosten zumindest aus einem variablen Kostenanteil in Abhängigkeit vom Endenergieverbrauch und bevorzugt auch aus einem jährlichen festen Kostenanteil ergeben, wobei der feste Kostenanteil zeitanteilig oder gradtagsproportional in den Gesamtkosten berücksichtigt werden kann.

Die fixen Kosten können z.B. Einzelbeträge sein, deren Höhe im wesentlichen feststeht (z.B. lmmissionsschutzmessungen, Mietkosten für Erfassungsgeräte, Abrechnungsgebühren). Die variablen Kosten entstehen vor allem aus dem Brennstoffverbrauch und sind dann über die jeweiligen Brennstoffpreise gegeben. Eine wesentliche Voraussetzung für die Durchführung des erfindungsgemäßen Verfahrens ist deshalb die fortlaufende Erfassung des Brennstoffverbrauchs und die Weiterleitung dieser Verbrauchswerte an eine Auswerteeinheit, wo die Verbrauchskosten aufintegriert werden.

So können in der Auswerteeinheit die aktuellen Gesamtkosten zumindest anhand des gesamten Endenergieverbrauchs ermittelt werden, gegebenenfalls unter Berücksichtigung neben dieser variablen Kostenanteile auch der vorgenannten festen Kostenanteile, wobei es vorgesehen sein kann, dass in der Auswerteeinheit wenigstens eine Berechnungsformel hinterlegt ist, insbesondere eine Tarifformel, mittels der die aktuellen Gesamtkosten berechnet werden.

Hierbei kann es vorgesehen sein, dass eine Berechnungsformel, insbesondere eine Tarifformel, durch die Eingabe seitens eines Bedieners, z.B. der Hausverwaltung, in der Auswerteeinheit vorliegt oder gegebenenfalls dass eine derartige Berechnungs- oder Tarifformel automatisch eingegeben bzw. aktualisiert wird. Hierfür kann es beispielsweise vorgesehen sein, eine Berechnungs- bzw. Tarifformel automatisch durch einen telekommunikationsgestützten Abruf einer Formel von einem Versorgungsunternehmen zu aktualisieren, so dass der Hausverwalter selbst hier nicht aktiv werden muss.

Ebenso kann es vorgesehen sein, dass mehrere Formeln in einer Auswerteeinheit gespeichert sind und bei einer Tarifänderung automatisch eine Änderung der jeweils geltenden Formel erfolgt, beispielsweise dadurch, dass eine Tarifformel eine zeitliche Gültigkeit aufweist und bei Ablauf der zeitlichen Gültigkeit eine automatische Umschaltung auf eine andere Tarifformel stattfindet. Hierfür kann den mehreren abgespeicherten Tarifformeln eine zeitliche Gültigkeit zugeordnet sein, so dass in der Auswerteeinheit automatisch nach einem Zeitintervall, welches eine Gültigkeit für eine bestimmte Tarifformel darstellt, die Umschaltung stattfindet.

Mit Hilfe einer solchen Tarifformel können sich die Gesamtkosten für den Brennstoff z.B. aus einem Leistungspreis ergeben, der mit der vereinbarten Anschlussleistung zu multiplizieren ist, und einem Arbeitspreis, der mit der abgenommenen Brennstoff- bzw. Fernwärmemenge zu multiplizieren ist. Damit sind zu jedem Zeitpunkt der Abrechnungsperiode die bis dato aufgelaufenen Brennstoffkosten ermittelbar, wobei der aus dem Leistungspreis resultierende jährliche Kostenanteil zeitanteilig oder proportional zu Gradtagsanteilen aufintegriert wird.

Es kann weiterhin auch vorgesehen sein, dass die Gesamtkosten und/oder Kosten der Nutzeinheiten in einer Auswerteeinheit zu einem Stichtag, insbesondere für jeden Tag gespeichert werden. Beispielsweise kann hierfür eine Datenbank vorgesehen sein, die in der Auswerteeinheit oder aber auch extern zu einer Auswerteeinheit vorgehalten wird. Ebenso besteht die Möglichkeit, in einer Datenbank, gegebenenfalls einer anderen oder derselben wie die vorgenannte Datenbank, nur den Endenergieverbrauch stichtagsgenau, beispielsweise tagesgenau, d.h. zu jedem Tag abzulegen, um so die zu einem beliebigen Stichtag aufgelaufenen Kosten auch bei einer nachträglichen Eingabe oder Änderung eines Tarifs ermitteln zu können.

Nicht leitungsgebundene Brennstoffe, wie insbesondere Heizöl, aber auch Flüssiggas, werden zu einem bestimmten von der aktuellen Marktsituation abhängigen Preis eingekauft. Auch in diesem Fall können die aktuellen Brennstoffkosten ermittelt werden, wenn der momentane Brennstoffverbrauch mit einem entsprechenden Endenergieverbrauchszähler, also Brennstoffzähler permanent erfasst wird und der momentane Verbrauchswert entsprechend an die Auswerteeinheit weitergeleitet wird, in der damit durch Multiplikation mit dem jeweiligen Brennstoffpreis die aktuellen Brennstoffkosten ermittelt werden können. Wichtig dabei ist, dass ggf. der Preis einer älteren Brennstofflieferung anzusetzen ist, wenn die entsprechenden Vorräte noch nicht verbraucht sind.

Die übrigen zu verteilenden Kosten fallen häufig einmalig in einem Jahr unabhängig vom Brennstoffverbrauch an. Auch diese Kosten können vorab in die Auswerteeinheit eingegeben werden und lassen sich durch zeit- oder gradtagsproportionale Verteilung auf das Jahr in den momentanen Kosten berücksichtigen.

Gemäß dem beanspruchten Verfahren besteht nun die Möglichkeit, anhand der ermittelten Gesamtkosten eine Verteilung dieser Gesamtkosten innerhalb einer Liegenschaft, beispielsweise auf die verschiedenen Nutzeinheiten und gegebenenfalls innerhalb der Nutzeinheiten an die verschiedenen Verbrauchsstellen vorzunehmen.

Gemäß dem Verfahren ist es dabei, wie vorgenannt vorgesehen, dass durch Verbrauchszähler, insbesondere Heizkostenverteiler und/oder Wärmemengen- und/oder Warmwasserzähler die Wärme und/oder Warmwasserverbräuche erfasst werden. Diese, auf die jeweiligen Nutzungseinheiten bzw. auf die jeweiligen Verbrauchsstellen bezogenen Verbräuche, die durch derartige Zähler ermittelbar sind, können sodann in einer Ausführung der Erfindung an die Auswerteeinheit übermittelt werden, beispielsweise kabel- und/oder funkgebunden, um sodann innerhalb der Auswerteeinheit die Verteilung auf jede Nutzeinheit und/oder Verbrauchsstelle vorzunehmen und die verteilten Kosten zurückzukommunizieren in die Nutzeinheit bzw. die Verbrauchsstelle. Ebenso besteht die Möglichkeit die zuvor genannten Kosten (Gesamtkosten und/oder verteilte Kosten) auch an den Tarifzähler, bzw. allgemein den Endenergieverbrauchszähler zu kommunizieren, um auch an dieser Stelle die Kosten zur Anzeige zu bringen oder zumindest dort zum Abruf bereitzuhalten.

Ebenso ist es möglich, die Gesamtkosten, die durch die Auswerteeinheit ermittelt werden, an die jeweiligen Verbrauchszähler in den Nutzeinheiten, wo diese jeweils Verbrauchsstellen zugeordnet sind oder eine dafür vorgesehenen Einheit in einer Nutzeinheit zu kommunizieren, um sodann anhand der übermittelten Gesamtkosten vor Ort, d.h. in jedem Verbrauchszähler, einer vorgesehenen Einheit, die Umrechnung bezogen auf den Verbrauch jeder Verbrauchsstelle und/oder Nutzeinheit durchzuführen.

Für die Verbindung in gegebenenfalls nur die eine Richtung von der Auswerteeinheit zu den Verbrauchsstellen bei der Übermittlung der Gesamtkosten oder aber auch bei einer bidirektionalen Verbindung, bei der zunächst die Verbräuche an die Auswerteeinheit und anschließend nach der Verteilung zu den Verbrauchsstellen zurück übermittelt werden, können geeignete Verbindungen, wie beispielsweise kabelgebunden, z.B. durch M-Bus oder auch durch Funk gewählt werden.

Die ermittelten, auf die einzelnen Nutzeinheiten und/oder einzelnen Verbrauchsstellen verteilten Kosten können sodann noch gegebenenfalls beschränkt werden auf einen verbrauchsabhängigen Anteil (z.B. 70% der momentanen Gesamtkosten), wobei die restlichen verbrauchsunabhängigen Kosten proportional zur beheizten Wohn- bzw. Nutzfläche in einer Nutzeinheit und/oder Verbrauchsstelle verteilt werden.

Es können mittels der beiden oben genannten Kommunikationsmöglichkeiten die in einer Auswerteeinheit ermittelten Kosten der Nutzeinheit beispielsweise auch mittels eines Verbrauchszählers bei einem Nutzer zur Anzeige gebracht werden. So kann ein derartiger Verbrauchszähler, wie beispielsweise ein Heizkostenverteiler, Warmwasserzähler etc. zwei Funktionen übernehmen, nämlich zum einen die Ermittlung des Verbrauchs und zum anderen die Anzeige der Kosten in Abhängigkeit von diesem Verbrauch.

Insbesondere dann, wenn in einer Liegenschaft mehrere Verbrauchsstellen und somit auch Messstellen vorliegen, kann es sodann vorgesehen sein, dass die Kosten der Nutzeinheiten von einer Auswerteeinheit zu wenigstens einem Verbrauchszähler einer Nutzeinheit funk- und/oder kabelgebunden übermittelt werden und dort zur Anzeige gebracht oder zumindest zur Anzeige bzw. zum Abruf bereit gehalten werden. So besteht zum einen die Möglichkeit, die Kosten einer Nutzeinheit an wenigstens einem, gegebenenfalls mehreren Verbrauchszählern dieser Nutzeinheit anzuzeigen, wobei ebenso die Möglichkeit besteht, die Kosten der Nutzeinheit bereits verteilt auf jede Verbrauchsstelle derart anzuzeigen, dass die Anzeige für eine Verbrauchsstelle an dem dieser Verbrauchsstelle zugeordneten Verbrauchszähler erfolgt.

Hat also ein Nutzer einer Nutzeinheit wie oftmals üblich mehrere Verbrauchs- und somit auch Messstellen, wie es beispielsweise bei der Abrechnung mit Heizkostenverteilern dadurch vorkommt, dass ein solcher Heizkostenverteiler an jedem Heizkörper einer Nutzeinheit angeordnet ist, so kann der ermittelte Kostenanteil rechnerisch auf jede einzelne Verbrauchsstelle und in diesem Beispiel jeden einzelnen Heizkörper verteilt werden.

Der verbrauchsabhängige Kostenanteil lässt sich unmittelbar entsprechend den jeweiligen Verbräuchen den jeweiligen Messstellen zuordnen. Für die verbrauchsunabhängigen Kosten gilt dies ggfs. nicht, da in der Regel nur die gesamte Nutzfläche des Verbrauchers bekannt ist. In einem solchen Fall kann es vorgesehen sein, die für diesen Verbraucher ermittelten verbrauchsunabhängigen Kosten nach einem Ersatzschlüssel, z.B. der für jeden Heizkostenverteiler bekannten Heizkörperleistung zu verteilen. Der Verbraucher wird sich in der Regel nicht nur für die auf eine einzelne Verbrauchsstelle entfallenen Kosten interessieren, sondern für seine gesamten Energiekosten. Hierzu können an die einzelnen Messstellen bzw. Verbrauchszähler neben den der ihr zugeordneten auch die gesamten für die Wohnung bzw. Nutzeinheit entstandenen Energiekosten übertragen werden. Durch die Anzeige an der Messstelle können dann nacheinander oder mit Hilfe einer geeigneten Menüführung Einzel- und Gesamtverbrauch sowie die Energiekosten für die Messstelle, für die gesamte Wohnung oder auch für das gesamte Haus angezeigt werden. Ebenso kann es vorgesehen sein, verbrauchsabhängige und -unabhängige Kosten separat anzeigen zu können.

Sollen noch weitere Kosten berücksichtigt werden, die in die Gesamtkosten einfließen sollen und somit ebenso zur Anzeige gebracht werden sollen, so kann es vorgesehen sein, dass an einer Auswerteeinheit oder an einer anderen Einheit zur Übertragung an die Auswerteeinheit derartige weitere Kosten eingegeben werden können.

Zur Vereinfachung des Verfahrens und des gesamten Systems kann es vorgesehen sein, dass eine Auswerteeinheit durch einen, ggfs. auch durch jeden Verbrauchszähler einer Nutzeinheit gebildet wird. Dies ist insbesondere vorteilhaft, da Verbrauchszähler üblicherweise ohnehin eine Elektronik zur Erfassung des Verbrauchs an einer Verbrauchsstelle aufweisen, so dass weiterhin dieselbe Elektronik auch eine Auswerteeinheit bilden kann, um die Gesamtkosten zu berechnen. Es können sodann die ermittelten Kosten beispielsweise an eben diesem Verbrauchszähler zur Anzeige gebracht werden oder aber auch noch an weitere Verbrauchszähler derselben oder einer anderen Nutzeinheit übermittelt werden.

Ebenso kann es vorgesehen sein, dass die Kosten an eine zentrale Anzeigeeinheit einer Nutzeinheit übermittelt werden, insbesondere wobei die Kosten als Gesamtkosten und/oder als Kosten der Nutzeinheit und/oder als verbrauchsstellenabhängige Kosten angezeigt werden.

Hierbei kann es auch vorgesehen sein, dass durch eine Auswerteeinheit lediglich die aufakkumulierten Gesamtkosten zur Verfügung gestellt werden, wobei an die Anzeigeeinheit von den verschiedenen Verbrauchsstellen und den diesen zugeordneten Verbrauchszählern die jeweiligen, einer Verbrauchsstelle zugeordneten Verbräuche übermittelt werden, so dass die verteilten Kosten, also die Kosten pro Nutzeinheit oder aber auch die Kosten pro Verbrauchsstelle, erst in der zentralen Anzeigeeinheit berechnet und zur Anzeige gebracht werden.

Für die Datenübertragung ist es sinnvoll, diese Anzeigeeinheit in ein einheitliches Netzwerk, in dem die einzelnen Verbrauchszähler mit der Auswerteeinheit kommunizieren, einzubinden. Die Anzeigeeinheit kann unabhängig von den Verbrauchszählern auch mit einer verbesserten Anzeigemöglichkeit, z.B. einem größeren Display ausgestattet werden. Weiterhin ist es möglich, einen größeren Datenspeicher und ggf. Rechenleistung vorzusehen, um dem Verbraucher auch die Anzeige zurück liegender Verbräuche zu ermöglichen oder um verschiedene statistische Auswertungen, wie einen Vergleich der Verbräuche der einzelnen Messstellen oder die Analyse der zeitlichen Verbrauchsentwicklung vorzunehmen und die Ergebnisse in geeigneter Form, also z.B. als Tabelle oder Diagramm, darzustellen. Ein solches Netzwerk ist auch ohne eine zentrale Anzeigeeinheit vorteilhaft.

Hierbei kann es auch vorgesehen sein, dass eine Auswerteeinheit mit einer Datenverarbeitungsanlage einer Hausverwaltung kommuniziert, beispielsweise kabel- und/oder funkgebunden, insbesondere zum Austausch von Kosten- und/oder Abrechnungsinformationen und insbesondere zur Erstellung von Zwischenabrechnungen und/oder Anpassungen der Vorauszahlungen und/oder Übernahme von Einzelkosten. Dies ist insbesondere dann sinnvoll, wenn außerhalb der üblichen Abrechnungszeiträume ein Nutzerwechsel stattfindet, so dass dann genau auf den Tag des Nutzerwechsels bezogen eine Zwischenabrechnung erstellt werden kann.

Neben der Einbindung von Verbrauchszählern, Auswerteeinheit und ggfs, einer Anzeigeeinheit in ein Netzwerk, insbesondere ein Funknetzwerk, kann es ergänzend auch vorgesehen sein, Stellvorrichtungen für Heizkörperventile in dieses Netzwerk einzubinden, insbesondere um den Verbrauch an einer bestimmten Verbrauchsstelle zu steuern bzw. zu regeln, z.B. bei einer Budgetüberschreitung automatisch zu begrenzen.

Weist z.B. das Konto eines Mieters bei der Hausverwaltung ein negatives Saldo auf, ist er also mit seinen Miet- oder Nebenkostenvorauszahlungen im Rückstand, so besteht seitens der Hausverwaltung ggf. der Wunsch, zumindest eine weitere Zunahme dieser Kontoüberziehung zu verhindern, indem z.B. sein Heizwärmebezug limitiert wird. Das kann dadurch erfolgen, dass in das Datenübertragungsnetzwerk auch die Heizkörperstellventile der Wohnungen eingebunden werden. Liegt für einen Nutzer ein negativer Konto-Stand vor, so kann eine entsprechende Information an die Auswerteeinheit gegeben werden, durch die über das Datenübertragungsnetzwerk ein Steuerbefehl an die entsprechenden Ventile gegeben werden, mit dem der Heizwärmebezug für die entsprechende Wohnung völlig unterbunden oder die Sollwerteinstellung des Ventils auf einen Mindestwert reduziert wird.

In der bisher beschriebenen Ausführung kann die Kostenermittlung in regelmäßigen Abständen (z.B. stündlich oder täglich) in der Auswerteeinheit durchgeführt und die Ergebnisse über das Datenübertragungsnetzwerk an die Messstellen bzw. die Wohnungsanzeigegeräte (zurück)übertragen werden. Dies impliziert einen vergleichsweise dichten Datenverkehr der u.U. zu einer hohen Belastung des Übertragungsnetzwerkes führt.

Dieser Nachteil lässt sich vermeiden, wenn die Aufgaben der Auswerteeinheit teilweise von den Rechenwerken der Messstellen übernommen werden. Dies kann durch die Übertragung von einzelnen Berechnungsparametern (z.B. Bewertungsfaktoren), aber auch von einfachen Berechnungsformeln, die in den Rechenwerken der Messgeräte ausgeführt werden sollen, erfolgen.

Dadurch lässt sich das zu übertragende Datenvolumen deutlich reduzieren. Die Ermittlung der aktuellen Einzelkosten erfolgt im einfachsten Fall dadurch, dass die Summe der aktuellen Kosten durch die Summe der aktuellen Verbräuche dividiert wird und das Ergebnis (der so gen. Einheiten- oder Strichpreis) mit den Verbrauchseinheiten der jeweiligen Verbraucher multipliziert wird. Da die Kostenentwicklung im Wesentlichen durch den Brennstoffverbrauch bestimmt wird, letzterer sich aber im wesentlichen aus der Summe der Einzelverbräuche ergibt, ist der Strichpreis nur sehr wenig veränderlich. Für eine näherungsweise Anzeige der Verbrauchskosten an den einzelnen Messstellen reicht es deshalb, den Einheitenpreis in größeren zeitlichen Abständen durch Übertragung an die einzelnen Messstellen bzw. Wohnungsanzeigegeräte zu übertragen. Das kann regelmäßig passieren (z.B. einmal in der Woche) oder immer dann, wenn der Strichpreis sich um einen bestimmten Betrag geändert hat (z.B. um 0,01 ct/Einheit).

Die Eingabe von Kosten oder Tarifformeln in die Auswerteeinheit kann manuell über eine Tastatur oder automatisch über eine geeignete Schnittstelle erfolgen. Insbesondere kann vorgesehen sein, dass die Auswerteeinheit mit der kaufmännischen EDV-Anlage der Hausverwaltung verbunden ist, so dass fakturierte Einzelkosten (z.B. f.d. Immissionsschutzmessung) direkt in die Auswerteeinheit übertragen werden. Ebenso können Tarifanpassungen für die Tarifzähler berücksichtigt werden, wobei die entsprechend aktualisierten Tarifformeln vorzugsweise vom Host eines Abrechnungsservice zentral z.B. über eine Modem-Verbindung auf die Auswerteeinheiten der betroffenen Liegenschaften hinuntergeladen werden.

In umgekehrter Richtung können über die Schnittstelle zwischen der Auswerteeinheit und der kaufmännischen EDV-Anlage der Hausverwaltung auch zu jedem beliebigen Zeitpunkt die momentan aufgelaufenen Kosten den Konten der einzelnen Wohnungsmieter zugeordnet werden. Damit wird z.B. die Anpassung von monatlichen Heizkostenvorauszahlungen erleichtert. Ebenso können bei einem Mieterwechsel die bis dahin aufgelaufenen Kosten in einer zumindest vorläufigen Schlussrechnung weit gehend ausgeglichen werden und es muss nicht mehr auf die evtl. erst Monate später vorliegende endgültige Heizkostenabrechnung gewartet werden.

Ausführungsbeispiele der Erfindung sind in den nachfolgenden Figuren dargestellt. Es zeigen:
- Figur 1:: einen Netzwerkverbund mit kombinierten Mess- und Anzeigestellen
- Figur 2:: einen Netzwerkverbund mit Messstellen und zentraler Anzeige

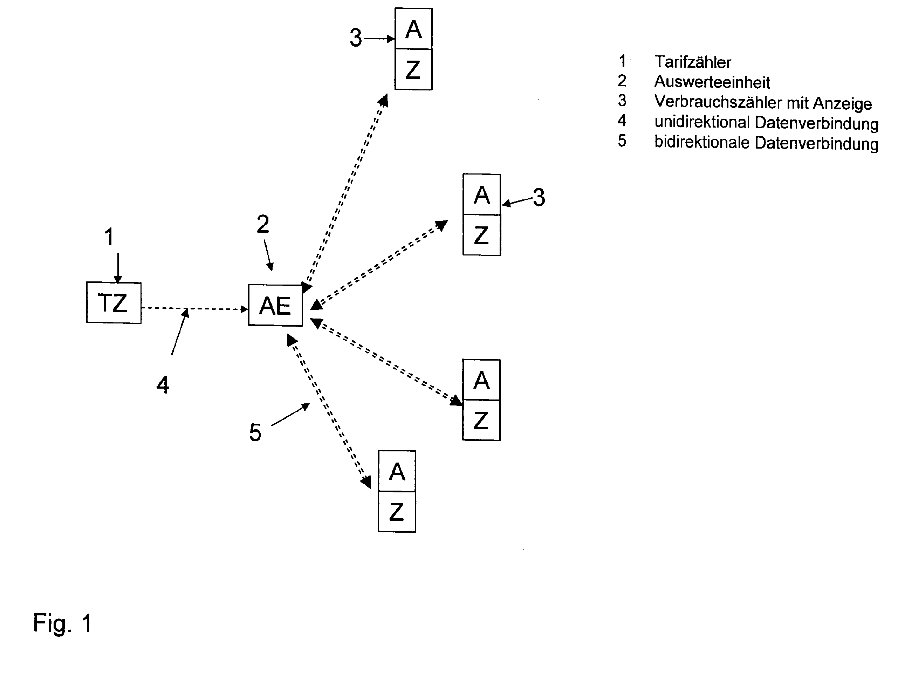

Die Figur 1 zeigt einen Netzwerkverbund mit einem Tarifzähler 1, einer Auswerteeinheit 2, sowie mehreren Messstellen, wie z.B. Heizkostenverteilern 3, an denen jeweils auch die Kosten angezeigt werden können. Diese einzelnen Geräte stehen miteinander z.B. durch Funk in Verbindung, teils unidirektional und teils bidirektional.

Erkennbar ist hier, dass mittels des Tarifzählers 1 der Brennstoffverbrauch kontinuierlich erfasst und in dieser Ausführung nur unidirektional an eine Auswerteeinheit 2 übermittelt wird. Anhand einer zugrunde liegenden Tarifformel und ggfs. weiterer der Auswerteeinheit zur Verfügung gestellten festen Kosten können in der Auswerteeinheit die Gesamtkosten ermittelt werden.

Durch die Messstellen 3, welche z.B. als Heizkostenverteiler, Warm-Wasserzähler etc. ausgebildet sein können, werden die Energie-Verbräuche an einer jeden Messstelle 3 ermittelt und ebenfalls an die Auswerteeinheit 2 übermittelt. In dieser kann sodann eine Verteilung (Berechnung) der Gesamtkosten auf jede Messstelle unter Zugrundelegung der Verbrauchswerte der Messstellen erfolgen. Die Kosten, die auf jede Messstelle 3 entfallen, können sodann von der Auswerteeinheit 2 zurück an eine jede Messstelle 3 übertragen werden und können dort von einem Wohnungsnutzer abgelesen werden, so dass dieser jederzeit über die Kosten informiert ist, die an einer Messstelle 3 erzeugt werden. Auch kann es vorgesehen sein, dass hier an einer Messstelle 3 die Kosten über alle Messstellen 3, d.h. die Kosten der Nutzeinheit vorliegen und zur Anzeige gebracht werden können.

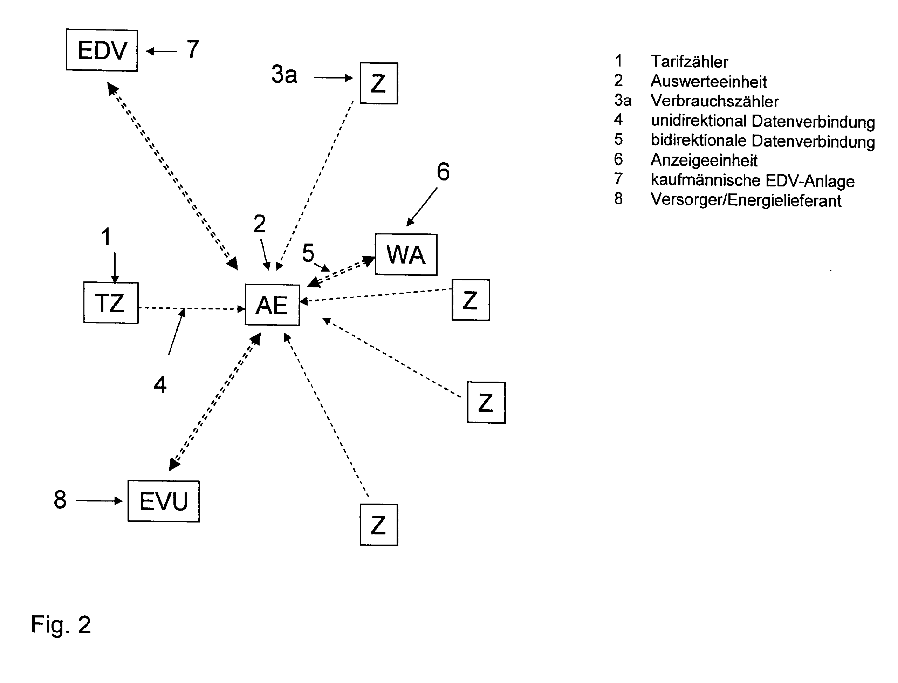

Die Figur 2 zeigt einen anderen Netzwerkverbund mit einem Tarifzähler 1, einer Auswerteeinheit 2, Verbrauchszählern 3a, die je einer Messstelle einer Nutzeinheit zugeordnet sind, sowie eine zentrale Wohnungsanzeigeeinheit 6 und eine EDV 7, z.B. einer Hausverwaltung, sowie einen Energieversorger 8.

Auch hier wird der Gesamtenergieverbrauch durch einen Tarifzähler 1 erfasst und an eine Auswerteeinheit 2 übermittelt, die anhand einer Tarifformel und ggfs weiterer fester Kosten die Gesamtkosten ermittelt, wobei die Tarifformel z.B. durch einen Versorger/Energielieferanten 8 in die Auswerteeinheit 2 kommuniziert wird, z.B. durch Abfrage seitens der Auswerteeinheit 2.

Durch die Verbrauchszähler 3a wird wie auch in der Figur 1 der Energieverbrauch je Messstelle erfasst und ebenfalls an die Auswerteeinheit 2 übermittelt, so dass die Kosten je Messstelle und/oder die Kosten je Nutzeinheit, also z.B. je Wohnung ermittelt werden können.

Diese Kosten werden an die zentrale Wohnungsanzeigeeinheit 6 übertragen und können dort angezeigt oder abgerufen werden.

Weiterhin ist hier erkennbar, dass die gewonnenen Informationen über die Kosten der gesamten Wohnung bzw. pro Messstelle auch an die EDV 7 einer Hausverwaltung übertragen werden können, z.B. um Jahresabrechnungen vorzunehmen, oder auch um Zwischenabrechnungen, z.B. bei einem Mieterwechsel zu ermöglichen. Ebenso ist eine Übertragung von weiteren Kosten von der kaufmännischen EDV 7 an die Auswerteeinheit 2 möglich.

Dargestellt ist in den Figuren 1 und 2 jeweils eine Wohnung, die mit mehreren Verbrauchszählern 3 bzw. 3a (einer pro Messstelle) mit einer Auswerteeinheit 2 verbunden ist. In der Praxis sind jedoch zumeist mehrere Wohnungen jeweils wie im Beispiel dargestellt mit der Auswerteeinheit 2 verbunden. So kann über die EDV 7 einer Hausverwaltung der Energieverbrauch aller angeschlossenen Wohnungen bzw. Nutzeinheiten abgefragt werden.

Diese Beispiele verdeutlichen jeweils den Fall, dass ein Tarifzähler 1 unidirektional in ein Netzwerk eingebunden ist und somit die erfassten Brennstoffkosten an eine Auswerteeinheit 2 übermittelt. Es kann auch der Fall einer bidirektionalen Einbindung des Tarifzählers 1 in das Netzwerk vorgesehen sein, bei dem auch an den Tarifzähler 1 die von der Auswerteeinheit 2 ermittelten Kosten kommuniziert werden. Die Kosten können die Kosten einer jeden Nutzeinheit und z.B. auch die Kosten jeder Messstelle einer jeden Nutzeinheit umfassen. Es kann auch vorgesehen sein, dass bei allen vorbeschriebenen Ausführungen der Tarifzähler 1 selbst eine Auswerteeinheit 2 bildet, bzw. diese umfasst.

## Patentansprüche

1. Verfahren zur Bestimmung und/oder Anzeige von Heizkosten **dadurch gekennzeichnet, dass** der gesamte akkumulierte Endenergieverbrauch, einer Liegenschaft mit wenigstens einer Nutzeinheit fortlaufend erfasst und an eine Auswerteeinheit (2) übermittelt wird, in der die Gesamtkosten wenigstens anhand des akkumulierten Endenergieverbrauches ermittelt werden, wobei die Gesamtkosten anhand des in jeder Nutzeinheit durch Verbrauchszähler (3, 3a), insbesondere Heizkostenverteiler und/oder Wärmemengen- und/oder Warmwasserzähler erfassten Wärme- und/oder Warmwasserverbrauchs in Kosten für jede Nutzeinheit und/oder Verbrauchsstelle umgerechnet und zur Anzeige in einem Anzeigegerät (6,3) oder zum Abruf durch einen Nutzer einer Nutzeinheit bereitgehalten werden.

2. Verfahren nach Anspruch 1, **dadurch gekennzeichnet, dass** der akkumulierte Endenergieverbrauch den Brennstoff- und/oder Fernwärmeverbrauch für die Beheizung und/oder Warmwasserversorgung und/oder den Stromverbrauch, insbesondere für Hilfsantriebe umfasst.

3. Verfahren nach einem der vorherigen Ansprüche, **dadurch gekennzeichnet, dass** die Erfassung des akkumulierten Endenergieverbrauchs durch wenigstens einen Endenergieverbrauchszähler (1), insbesondere Tarifzähler erfolgt, der den für alle Nutzeinheiten erfassten gesamten Endenergieverbrauch kabel- und/oder funkgebunden an eine Auswerteeinheit (2) übermittelt.

4. Verfahren nach einem der vorherigen Ansprüche, **dadurch gekennzeichnet, dass** in der Auswerteeinheit (2) wenigstens eine Berechnungsformel, insbesondere eine Tarifformel hinterlegt ist, mittels der die aktuellen Gesamtkosten zumindest anhand des gesamten Endenergieverbrauchs ermittelt werden.

5. Verfahren nach einem der vorherigen Ansprüche, **dadurch gekennzeichnet, dass** sich die Gesamtkosten zumindest aus einem variablen Kostenanteil in Abhängigkeit vom Endenergieverbrauch und aus einem jährlichen festen Kostenanteil ergeben, wobei der feste Kostenanteil zeitanteilig oder gradtagsproportional in den Gesamtkosten berücksichtigt wird.

6. Verfahren nach einem der vorherigen Ansprüche, **dadurch gekennzeichnet, dass** weitere Kosten, die in die Gesamtkosten einfließen sollen, an einer Auswerteeinheit (2) oder an einer andern Einheit (6,7), insbesondere die EDV (7) einer Hausverwaltung, zur Übertragung an die Auswerteeinheit eingeben werden.

7. Verfahren nach einem der vorherigen Ansprüche, **dadurch gekennzeichnet, dass** eine Berechnungsformel, insbesondere Tarifformel mit zeitlicher Gültigkeit automatisch aktualisiert wird, insbesondere durch einen telekommunikationsgestützten Abruf einer Tarifformel von einem Versorgungsunternehmen (8).

8. Verfahren nach einem der vorherigen Ansprüche, **dadurch gekennzeichnet, dass** die Gesamtkosten und/oder Kosten der Nutzeinheiten in einer Auswerteeinheit (2) zu einem Stichtag, insbesondere für jeden Tag gespeichert werden.

9. Verfahren nach einem der vorherigen Ansprüche, **dadurch gekennzeichnet, dass** die in einer Auswerteeinheit (2) ermittelten Kosten der Nutzeinheiten mittels eines Verbrauchszählers (3) einem Nutzer zur Anzeige gebracht werden.

10. Verfahren nach Anspruch 9, **dadurch gekennzeichnet, dass** die Kosten der Nutzeinheiten von einer Auswerteeinheit (2) zu wenigstens einem Verbrauchszähler (3) einer Nutzeinheit funk- und/oder kabelgebunden übermittelt und dort zur Anzeige gebracht oder zum Abruf bereitgehalten werden.

11. Verfahren nach einem der vorherigen Ansprüche, **dadurch gekennzeichnet, dass** in einer Nutzeinheit zumindest die Verbrauchskosten für jede einzelne Verbrauchsstelle der Nutzeinheit an einem der Verbrauchsstelle zugeordneten Verbrauchszähler (3) angezeigt werden.

12. Verfahren nach einem der vorherigen Ansprüche, **dadurch gekennzeichnet, dass** ein Verbrauchszähler (3) eine Auswerteeinheit (2) bildet

13. Verfahren nach einem der vorherigen Ansprüche, **dadurch gekennzeichnet, dass** die Kosten an eine zentrale Anzeigeeinheit (6) einer Nutzeinheit übermittelt werden, insbesondere wobei die Kosten als Gesamtkosten und/oder als verbrauchsstellenabhängige Kosten angezeigt werden.

14. Verfahren nach einem der vorherigen Ansprüche, **dadurch gekennzeichnet, dass** eine Auswerteeinheit (2) mit einer Datenverarbeitungsanlage (7) einer Hausverwaltung kommuniziert, insbesondere zum Austausch von Kosten und oder Abrechnungsinformationen, insbesondere zur Erstellung von Zwischenabrechnungen und/oder Anpassungen der Vorauszahlungen und /oder Übernahme von Einzelkosten.

15. Verfahren nach einem der vorherigen Ansprüche, **dadurch gekennzeichnet, dass** wenigstens eine Auswerteeinheit (2) und die Verbrauchszähler (3,3a) und/oder zentrale Anzeigeeinheit (6) zusammen mit Stellvorrichtungen für Heizkörperventile in ein Netzwerk eingebunden sind, insbesondere zur Begrenzung des Verbrauchs bei Budgetüberschreitung.

16. System zur Berechnung und/oder Anzeige von Heizkosten umfassend
• wenigstens einen Endenergieverbrauchszähler (1) zur Erfassung des gesamten akkumulierten Endenergieverbrauchs einer Liegenschaft mit wenigstens einer Nutzeinheit,
• und eine Auswerteeinheit (2), an die der erfasste Endenergieverbrauch übermittelbar ist, und in der die Gesamtkosten wenigstens anhand des Endenergieverbrauches ermittelbar sind,
• und wenigstens einen Verbrauchszähler (3, 3a) für wenigstens eine Verbrauchstelle jeder Nutzeinheit zur Erfassung des Wärmeverbrauchs und/oder Warmwasserverbrauchs, wobei der Wärme- und/oder Warmwasserverbrauch von einem Verbrauchszähler (3,3a) an eine Auswerteeinheit (2) übermittelbar ist,
• und eine Anzeigeeinheit (3, 6), mittels der die von der Auswerteeinheit (2) ermittelten Kosten für die einzelnen Nutzeinheiten und/oder Verbrauchsstellen anzeigbar sind.

17. System nach Anspruch 16, **dadurch gekennzeichnet, dass** die Verbrauchszähler 3,3a), Auswerteeinheit (2) und Anzeigeeinheit (6, 3) in ein Netzwerk, insbesondere ein Funknetzwerk eingebunden sind.

18. System nach einem der vorherigen Ansprüche 16 oder 17, **dadurch gekennzeichnet, dass** in das Netzwerk Stellvorrichtungen für Heizkörperventile eingebunden sind, insbesondere zur Begrenzung des Verbrauchs bei Budgetüberschreitung.

19. System nach einem der vorherigen Ansprüche 16 bis 18, **dadurch gekennzeichnet, dass** die Auswerteeinheit (2) und/oder Anzeigeeinheit (6, 3) durch einen Verbrauchszähler (3) und/oder Tarifzähler (1) gebildet ist/sind.
